# EUROPEAN PATENT APPLICATION

(11) **EP 2 989 901 A1**
(43) Date of publication of application: **02.03.2016**
(21) Application number: 14782798.4
(22) Date of filing: 18.03.2014
(51) Int. Cl.: A23L 27/20, A23D 9/00, A23D 9/007, A23L 27/00

(54) **AGENT FOR IMPARTING HARDENED OIL FLAVOR**

(30) Priority: 10.04.2013 JP 2013082008
(71) Applicant: T. Hasegawa Co., Ltd., Tokyo 103-8431 (JP)
(72) Inventor: OKUBO, Koji, Kawasaki-shi Kanagawa 211-0022 (JP); MASUDA, Yui, Kawasaki-shi Kanagawa 211-0022 (JP); HAGIWARA, Yuko, Kawasaki-shi Kanagawa 211-0022 (JP)
(74) Representative: Adam, Holger
(86) International application number: PCT/JP2014/057347
(87) International publication number: WO 2014/167957

(57) **Abstract**

[Problem]

To provide an agent for imparting hydrogenated oil flavour that can impart a hydrogenated oil flavour leading to thick sweetness and rich taste to an oil product containing a reduced amount of hydrogenated oil.

[Means of Solution]

Provided is an agent for imparting hydrogenated oil flavour formed from (E)-6-octenal.

## Description

### Technical Field

The present invention relates to an agent for imparting hydrogenated oil flavour. More specifically, the present invention relates to an agent for imparting hydrogenated oil flavour formed from (E)-6-octenal, an agent composition for imparting hydrogenated oil flavour containing (E)-6-octenal as an active component, and an oil product containing the composition thereby having a hydrogenated oil flavour.

### Background Art

Hydrogenated oil is widely used for oil food products such as margarine, shortening and butter cream; confectionery such as donuts, cakes, chocolates; and cooking oil for other food products. Due to properties such as relatively high melting point, heat resistance and oxidative stability of hydrogenated oil, it recently contributes to the improvement in the quality of food products cooked in microwave ovens by imparting crispy texture and freshly-fried crunchy texture to fried food products and the like.

Hydrogenated oil is an edible processed oil that is solid at normal temperature and manufactured by, for example, a method in which vegetable oil such as soybean oil, rapeseed oil, palm oil, coconut oil and palm kernel oil or animal oil such as whale oil, fish oil, beef tallow and lard is hydrogenated at a temperature of about 160 to about 180°C in the presence of a nickel catalyst and the like. Hydrogenated oil is manufactured from inexpensive oil raw materials and has stable quality, and thus is used in large amounts in wide applications.

Many oils including sesame oil, soybean oil, rapeseed oil, lard and the like have a residual flavour of the raw material thereof. In this case, such oils are used for food production in order to exploit the flavour thereof. However, the distinct flavour from the raw material may hinder the flavour of some food products. Hydrogenated oil is configured to have unusual flavour/odour of the raw material, i.e., vegetable oil or animal oil, being removed, to have an aroma and flavour which is rather less distinctive and thus to be used in wide range of food products.

Hydrogenated oil has an odour referred to as "hydrogenation odour", "hydrogenation return odour", "return odour", "hardening odour", "hardening oil odour" and the like. The odour is caused by aldehydes and ketones typically including 6-nonenal, which are said to be generated from fatty acids in oil due to light, heat and the like (Non-Patent Documents 1 and 2).

The odour has been conventionally regarded as abnormal odour which may be unpopular. However, the odour recently tends to be recognised to impart to food products containing hydrogenated thick and mild sweetness which is built by processing the food products by heating and the like. For example, when donuts are deep-fried with oil containing hydrogenated oil, it has been seen that the cooked donuts have indescribable mild sweetness, so as to encourage customers to buy the products and impart sufficient satisfaction when the donuts are consumed. Products such as margarine and fat spreads containing hydrogenated oil were developed as butter substitutes. Unique rich taste and sweetness of such products enhances a milk flavour and is accepted and pervaded among general consumers over as long as several tens of years, and as a result is recognised as a favourable flavour.

Meanwhile it has been known that the hydrogenation process increases the amount of trans fatty acids in oil. Recently, the United States government has announced the guideline for labelling regarding trans fatty acids as trans fatty acids may cause arteriosclerosis. As a result, use of hydrogenated oil which contains a high amount of trans fatty acids is increasingly unpopular, and therefore there is a strong need for an efficient solution by, for example, developing an alternative oil.

Accordingly an oil product containing a reduced amount of trans fatty acids while having physical properties (such as a melting point) similar to hydrogenated oil has been developed, which is namely a hydrogenated oil substitute prepared by combining liquid fat and palm oil, lard, slightly hydrogenated oil, completely hydrogenated oil or the like followed by transesterification. However there has been a problem in that decreasing the degree of hydrogenation by such a method eliminates a unique flavour due to hydrogenation odour. Accordingly there is a strong need for development of a method that reduces the amount of trans fatty acids and imparts a hydrogenated oil flavour.

In the light of the problem, the following methods have been disclosed, for example: a method for reducing the amount of trans fatty acids while generating a flavour derived from hydrogenated oil by using 50% by mass or more of fractionated hard oil of palm oil (Patent Document 1); a method for providing cooling oil having a reduced amount of trans fatty acids and having a "hydrogenated oil flavour" similar to the flavour obtained by cooking conventional hydrogenated oil by using in combination palm oil and lard or a slightly hydrogenated oil instead of conventional hydrogenated oil (Patent Document 2); a method for reducing the amount of trans fatty acids while generating a flavour of hydrogenated oil by using palm oil purified by distillation (Patent Document 3); and a method for reducing the amount of trans fatty acids while generating a flavour derived from hydrogenated oil by using less than 50% of palm fractionated hard oil and 65% or less of palm fractionated soft oil (Patent Document 4). However, all the proposals disclosed in Patent Documents 1 to 4 contain a high amount of oil derived from palm oil and may decrease a flavour led by liquid oil odour resulting from linoleic acid and contain a high amount of hard fraction, thereby are insufficient in terms of quality and intensity of flavour.

There has been developed a manner for compensating for the flavour of hydrogenated oil of hydrogenated oil substitutes. For example, an agent for imparting hydrogenated oil flavour comprising vanillin and/or ethyl vanillin as an active component has been disclosed (Patent Document 5). However, the flavour is insufficient in terms of the quality and intensity thereof because the volatility is rather higher than the flavour of hydrogenated oil. It is also disclosed that using a partly hydrogenated oil having a peroxide value (POV) within a specific range can increase the hydrogenated oil flavour of low-trans fatty acid-containing oil (Patent Document 6). However, in order to obtain oil with high POV, a special treatment for increasing the peroxide value is required, which is time consuming. Further, it is disclosed that hydrogenated oil obtained from deodorised oil has a butter-like flavour (Patent Document 7). However, the oil is degraded due to the temperature during hydrogenation, contains highly volatile, unpleasant odour components and is insufficient in terms of the quality of the flavour.

### Prior Art Document

### Patent Document

Patent Document 1: Japanese Patent Application Laid-open No. 2008-271818
Patent Document 2: Japanese Patent Application Laid-open No. 2009-5681
Patent Document 3: Japanese Patent Application Laid-open No. 2009-240220
Patent Document 4: Japanese Patent Application Laid-open No. 2010-99037
Patent Document 5: WO 2008/032852
Patent Document 6: Japanese Patent Application Laid-open No. 2009-89684
Patent Document 7: Japanese Translation of PCT Application No. 2010-504753

### Non-Patent Document

Non-Patent Document 1: "Shokuhin Yushi no Nioi no Seibun (Odour components of food oil)", Journal of Japan Oil Chemist's Society, 17(1), 2-18 (1968)
Non-Patent Document 2: "Yushi no Nioi no Seibun ni tsuite (dai 2 ho) Suiten Shu no Kensaku (Odour components of oil (second report) Investigation of hydrogenation odour", Journal of Japan Oil Chemist's Society, 19(9), 883-887 (1970)

### Disclosure of Invention

### Technical Problem

An object of the present invention is to provide an agent for imparting hydrogenated oil flavour that can impart a "hydrogenated oil flavour" similar to conventional hydrogenated oil to so-called normal hydrogenated oil substitutes, namely oil products containing a reduced amount of trans fatty acids while having physical properties (such as a melting point) similar to hydrogenated oil, namely hydrogenated oil substitutes prepared by combining non-hydrogenated oil and palm oil, lard, slightly hydrogenated oil, completely hydrogenated oil or the like.

### Solution to Problem

The inventors of the present invention carried out exhaustive studies in order to achieve the above object. As a result, the inventors now surprisingly found that oil can have a "hydrogenated oil flavour" by adding (E)-6-octenal to liquid oil at a certain concentration and that food products cooked with the oil can also have a favourable aroma and flavour referred to as a "hydrogenated oil flavour". Thus the inventors have completed the present invention.

Accordingly the present invention provides the followings:
(1) An agent for imparting hydrogenated oil flavour formed from (E)-6-octenal;
(2) An agent composition for imparting hydrogenated oil flavour including (E)-6-octenal as an active component;
(3) An agent composition for imparting hydrogenated oil flavour including (E)-6-octenal and the following component A:
   component A: one or more selected from the group consisting of 3-methyl-2,4-nonanedione, trans-4,5-epoxy-2(E)-decenal, (E)-6-nonenal, (Z)-6-nonenal, (Z)-6-octenal and (E)-2-nonenal;
(4) The agent composition for imparting hydrogenated oil flavour according to (2), including (E)-6-octenal at a concentration in the range of 10 ppb to 10 ppm;
(5) The agent composition for imparting hydrogenated oil flavour according to any of (2) to (4), wherein the composition includes (E)-6-octenal at 10 ppb to 10 ppm, and is added to an oil product having a hydrogenated oil content of less than 50% with regard to the total amount of oil, so that the amount of (E)-6-octenal in the oil product is in the range of 10 ppt to 10 ppb;
(6) The agent composition for imparting hydrogenated oil flavour according to (3), wherein the composition includes (E)-6-octenal and the component A, the content of (E)-6-octenal is 10 ppb to 10 ppm, and the ratio between (E)-6-octenal and the component A is in the range of ((E)-6-octenal) / 3-methyl-2,4-nonanedione = 0.01 to 10, ((E)-6-octenal) / (E)-6-nonenal = 0.01 to 10, ((E)-6-octenal) / (Z)-6-nonenal = 0.01 to 10, ((E)-6-octenal) / (Z)-6-octenal = 0.01 to 10, ((E)-6-octenal) / (E)-2-nonenal = 0.01 to 10 or ((E)-6-octenal) / trans-4,5-epoxy-2(E)-decenal = 0.01 to 100;
(7) An oil product having a hydrogenated oil flavour, including the agent for imparting hydrogenated oil flavour according to (1) or the agent composition for imparting hydrogenated oil flavour according to any of (2) to (6), such that a concentration of (E)-6-octenal in the oil product is in the range of 10 ppt to 10 ppb;
(8) The oil product according to (7), wherein the hydrogenated oil content with regard to the total amount of oil is less than 50%;
(9) A flavour composition including (E)-6-octenal at 10 ppb to 10 ppm, the flavour composition being added to an oil product having a hydrogenated oil content of less than 50% with regard to the total amount of oil, so that the amount of (E)-6-octenal in the oil product is in the range of 10 ppt to 10 ppb;
(10) The flavour composition according to (9), wherein the composition includes (E)-6-octenal and the following component A, and the ratio between (E)-6-octenal and the component A is in the range of ((E)-6-octenal) / 3-methyl-2,4-nonanedione = 0.01 to 10, ((E)-6-octenal) / (E)-6-nonenal = 0.01 to 10, ((E)-6-octenal) / (Z)-6-nonenal = 0.01 to 10, ((E)-6-octenal) / (Z)-6-octenal = 0.01 to 10, ((E)-6-octenal) / (E)-2-nonenal = 0.01 to 10 or ((E)-6-octenal) / trans-4,5-epoxy-2(E)-decenal = 0.01 to 100:
   component A: one or more selected from the group consisting of 3-methyl-2,4-nonanedione, trans-4,5-epoxy-2(E)-decenal, (E)-6-nonenal, (Z)-6-nonenal, (Z)-6-octenal and (E)-2-nonenal;
(11) An oil product which is obtained by adding thereto the flavour composition according to (9) or (10), such that a concentration of (E)-6-octenal in the oil product is in the range of 10 ppt to 10 ppb, the oil product having a hydrogenated oil content of less than 50% with regard to the total amount of oil.

According to the present invention, margarine and fat spreads prepared by adding the agent for imparting hydrogenated oil flavour to oil can have a favourable aroma and flavour referred to as a "hydrogenated oil flavour". In addition, food products cooked with oil containing the agent for imparting hydrogenated oil flavour of the present invention as cooking oil or heat-processed food products with the agent for imparting hydrogenated oil flavour of the present invention directly added thereto can also have a favourable aroma and flavour referred to as a "hydrogenated oil flavour". As used herein, the term "hydrogenated oil flavour" means thick and mild sweetness which is built as a result of processing, e.g. heating, of food products containing hydrogenated oil, at least vegetable hydrogenated oil and particularly soybean hydrogenated oil.

An agent for imparting hydrogenated oil flavour and an oil product with a hydrogenated oil flavour imparted thereto of the present invention are hereinafter described in further detail.

An active component of the agent for imparting hydrogenated oil flavour of the present invention, (E)-6-octenal, is a well-known flavour compound, and is known to be added at 1 to 25 ppm to various food and beverage such as dairy products, oil food products, fruit processed products, vegetable processed products, confectionery, cereals, bakery products, meat products, seafood products, egg processed products, sweeteners, soup, alcohol beverages, non-alcohol beverages and the like (EFSA Journal 2011; 9(11): 2397, p. 22, p. 27, p. 44 (Table II. 1.1), p. 45 (Table II. 1.2). However, application and properties thereof as an agent for imparting hydrogenated oil flavour has not been known at all. Patent documents cited above do not disclose or suggest that (E)-6-octenal can impart to oil food products a hydrogenated oil flavour at a concentration of 10 ppt to 10 ppb which is far below the concentration in the food and beverage as described above (1 to 25 ppm).

Meanwhile (Z)-6-octenal, a geometric isomer of the compound of the present invention, is also a well-known flavour compound and is proposed to be used for cosmetic fragrance or cosmetic articles (U.S. Patent Nos. 4,192,781 and 4,132,675). These U.S. Patents disclose that (Z)-6-octenal has fat-like, soap-like, green-like and fruit-like aromas and can be used as a flavouring agent. It is also described that (Z)-6-octenal has green- and melon-like aromatic characteristics (J. Am. Oil Chem. Soc., 58(6), 680-682 (1981)) and that (Z)-6-octenal can be used as a milk flavour enhancing agent (Japanese Patent Application Laid-open No. 2003-189). However, these documents do not refer to (E)-6-octenal, which is a geometric isomer of (Z)-6-octenal, and do not disclose or suggest aromatic characteristics thereof.

An active component of the present invention, (E)-6-octenal, can also be obtained by separation by preparative chromatography from a mixture of geometric isomers of 6-octenal or can be obtained by synthesis according to the method described in, for example, J. Am. Chem. Soc., 86, 1964, 3759-3767.

The present invention relates to an agent for imparting hydrogenated oil flavour containing (E)-6-octenal as an active component. An active component of the present invention, (E)-6-octenal, can impart a hydrogenated oil flavour to an oil product such as margarine and fat spreads by adding to the oil product such as margarine and fat spreads at generally 10 ppt to 10 ppb, preferably 20 ppt to 5 ppb and more preferably 50 ppt to 2 ppb as (E)-6-octenal.

(E)-6-octenal is preferably added to the oil product as an agent composition for imparting hydrogenated oil flavour because the amount of (E)-6-octenal added to the oil product is extremely low in order to exhibit an effect as an agent for imparting hydrogenated oil flavour and the amount is within a specific range.

The agent composition for imparting hydrogenated oil flavour of the present invention can contain (E)-6-octenal at, on the basis of the mass of the imparting agent composition, generally 10 ppb to 10 ppm, preferably 20 ppb to 5 ppm and more preferably 50 ppb to 2 ppm. The agent composition for imparting hydrogenated oil flavour can be added at about 0.01% to 1% to an oil product, so that the amount of (E)-6-octenal in the oil product is 10 ppt to 10 ppb, preferably 20 ppt to 5 ppb and more preferably 50 ppt to 2 ppb, thereby the oil product is able to have thick and mild sweetness and rich taste closely similar to the "hydrogenated oil flavour" imparted thereto.

When the amount of (E)-6-octenal added to an oil product is less than 10 ppt, an effect for imparting a hydrogenated oil flavour is poor. When the amount of (E)-6-octenal added to an oil product is higher than 10 ppb, a characteristic aldehyde-like aroma intrinsic in (E)-6-octenal is distinctive, which is not preferable.

An oil product to which the agent for imparting hydrogenated oil flavour of the present invention is added is preferably the one containing less than 50% by mass of hydrogenated oil, particularly less than 30% by mass of hydrogenated oil and less than 20% by mass of hydrogenated oil. Thereby even when the amount of trans fatty acids contained is reduced, a "hydrogenated oil flavour" as a preferable aroma and flavour can be imparted to the oil product. An oil product containing more than 50% by mass of hydrogenated oil therein naturally has a hydrogenated oil flavour and thus use of the present agent is not required; however it has a disadvantage in that such an oil product contains a high amount of trans fatty acids.

Non-hydrogenated oil contained in an oil product of the present invention is not particularly limited and examples thereof include any edible oil such as soybean oil, rapeseed oil, safflower oil, corn oil, sunflower oil, cottonseed oil, rice oil, olive oil, palm oil, coconut oil, sesame oil, beef tallow, lard, fish oil and medium chain triglyceride and processed oil thereof obtained by fractionation, transesterification and the like. These oils may be respectively used alone or two or more oils may be used in combination. It is preferable that the raw material oil does not have aroma *per se* or it has been highly purified to such an extent that has almost no aroma.

Examples of hydrogenated oil contained in an oil product of the present invention include the one obtained by hydrogenating a raw material including vegetable oil such as soybean oil, rapeseed oil, palm oil, coconut oil and palm kernel oil or animal oil such as fish oil, beef tallow and lard, in the presence of a nickel catalyst and the like at a temperature of about 120 to about 200°C. The hydrogenated oil preferably has a melting point in the range of 10 to 40°C and particularly 20 to 35°C. Examples of hydrogenated oil include rapeseed oil, soybean oil, sunflower seed oil, cottonseed oil, peanut oil, rice bran oil, corn oil, safflower oil, kapok oil, sesame oil, evening primrose oil and the like. These hydrogenated oils may be respectively used alone or two or more of them may be used in combination.

An oil product of the present invention is preferably selected so that it has a trans fatty acid content of 3% by mass or less. In nature, trans fatty acids are contained in milk fat at around 5% by mass and it is believed that consumption of trans fatty acids at such an extent may not significantly impact health. However, according to the present invention, hydrogenated oil-flavoured oil having a "hydrogenated oil flavour" can be obtained while reducing the content of trans fatty acids which have health concerns, as described above.

The content of trans fatty acids in oil can be determined according to AOCS Official Method Ce If-96 (Revised 2002).

An oil product of the present invention may contain oil derived from palm as a part of non-hydrogenated oil. By using oil derived from palm, the oil product has an improved heat stability and can have a preferable "hydrogenated oil flavour" based on a plain palm oil flavour. The content of non-hydrogenated oil derived from palm is not strictly limited and may vary according to an application of hydrogenated oil-flavoured oil within a broad range. Examples of the content include, however, on the basis of the mass of hydrogenated oil-flavoured oil, generally at least 50% by mass, particularly at least 60% by mass and still particularly at least 80% by mass. Examples of the oil derived from palm include palm oil, palm olein and the like.

The agent composition for imparting hydrogenated oil flavour of the present invention may further contain, in addition to (E)-6-octenal, one or more flavours selected from the group consisting of 3-methyl-2,4-nonanedione, trans-4,5-epoxy-2(E)-decenal. (E)-6-nonenal, (Z)-6-nonenal. (Z)-6-octenal and (E)-2-nonenal. Thereby it is possible to impart to an oil product a further preferable hydrogenated oil flavour.

The ratio between (E)-6-octenal and the other flavour is, provided that one or more selected from the group consisting of 3-methyl-2,4-nonanedione, (E)-6-nonenal, (Z)-6-nonenal, (Z)-6-octenal and (E)-2-nonenal is designated as a component A, in the range of ((E)-6-octenal) / A = 0.001 to 100 and preferably 0.01 to 10 on the mass basis, or alternatively ((E)-6-octenal) / trans-4,5-epoxy-2(E)-decenal = 0.001 to 1000 and preferably 0.01 to 100.

The agent composition for imparting hydrogenated oil flavour of the present invention may optionally contain a conventional flavour compound which is used for dairy flavouring agents such as butter flavouring agents. Examples of the conventional flavour compound include, without limitation, acids such as formic acid, propionic acid, butyric acid, valeric acid, isovaleric acid, caproic acid, trans-2-hexenoic acid, heptanoic acid, caprylic acid, nonanoic acid, 5-hydroxynonanoic acid, capric acid, 2-decenoic acid, 4-decenoic acid, 5-decenoic acid, 6-decenoic acid, 9-decenoic acid, 5-hydroxydecenoic acid, 5-hydroxyundecanoic acid, lauric acid, 5-hydroxydodecanoic acid, myristic acid, pentadecanoic acid, isopentadecanoic acid, palmitic acid, heptadecanoic acid, stearic acid, oleic acid, linoleic acid and linolenic acid; aldehydes such as acetaldehyde, propanal, butanal, 2-butenal, hexanal, octanal, 4-heptenal, 2,4-octadienal, nonanal, 2-nonenal, 2,4-nonadienal, 2,6-nonadienal, decanal, 2,4-decadienal, undecanal, 2,4-undecadienal, dodecanal, benzaldehyde, vanillin, ethyl vanillin and furfural; esters such as ethyl formate, ethyl acetate, butyl acetate, isoamyl acetate, decyl acetate, dodecyl acetate, phenethyl acetate, ethyl lactate, ethyl butyrate, ethyl 2-methylbutyrate, ethyl 3-ethylbutyrate, methyl valerate, methyl caproate, ethyl caproate, methyl heptanoate, ethyl heptanoate, ethyl caprylate, isoamyl caprylate, heptyl caprylate, methyl nonanoate, ethyl nonanoate, methyl caprate, ethyl caprate, ethyl undecanoate, methyl laurate, ethyl laurate, ethyl myristate, ethyl palmitate, methyl salicylate, diethyl succinate, diethyl sebacate, ethyl 5-hydroxyhexanoate, ethyl 5-hydroxydecanoate, ethyl 5-hydroxyundecanoate, propyl 5-hydroxydecanoate, isopropyl 5-hydroxydecanoate, 2-methylpropyl 5-hydroxyoctanoate and ethyl 5-hydroxy-9-methyldecanoate; alcohols such as ethanol, propanol, butanol, pentanol, hexanol, heptanol, octanol, nonanol, decanol, benzyl alcohol, phenylethyl alcohol and furfuryl alcohol; ketones such as 2-heptanone, 2-octanone, 3-octanone, 1-octen-3-one, 2-nonanone, 3-nonanone, 8-nonen-2-one, 2-undecanone, 2-tridecanone, acetoin, 5-hydroxy-4-octanone, diacetyl, 2,3-pentadione, 2, 3-hexadione, 2, 3-heptadione, acetyl isovaleryl, p-methoxyacetophenone, benzophenone and maltol; oxygen-containing cyclic compounds such as 3-hydroxy-2-methyl-4H-pyran-4-one, 2-ethyl-3-hydroxy-4H-pyran-4-one, 2,5-dimethyl-4-hydroxy-3(2H)-furanone; 3-methyl-1,2-cyclopentanedione, 3-ethyl-1,2-cyclopentanedione, 3,4-methylenedioxybenzaldehyde, 3-hydroxy-4,5-dimethyl-2(5H)-furanone, 5-ethyl-3-hydroxy-4-methyl-2(5H)-furanone, 2-ethyl-4-hydroxy-5-methyl-3(2H)-furanone and 3,4-dimethyl-1,2-cyclopentanedione; nitrogen-containing compounds such as phenylethyl anthranilate, trimethylamine, indole, skatole, pyridine, isoquinoline, pyrazine and methylpyrazine; sulphur-containing compounds such as methyl mercaptan, isobutyl mercaptan, 2,4-dithiapentane, dimethyl sulphide, dimethyl disulphide, 2,4-dithiapentane, dimethyl trisulphide, dimethyl sulphoxide, dimethyl sulphone, methanethiol, methylsulphonylmethane, methyl isothiocyanate, ethyl isothiocyanate, allyl isothiocyanate, 2-methyl-3-butanethiol, methional, ethyl thioacetate, methyl thiobutyrate, 3-butenyl isothiocyanate, 2-methylthiophene, benzothiazole, sulphurol, acetyl lactic acid thiomethyl ester, propionyl lactic acid thiomethyl ester, butyryl lactic acid thiomethyl ester, valeryl lactic acid thiomethyl ester, 2-methylbutyryl lactic acid thiomethyl ester, decylyl lactic acid thiomethyl ester, acetyl lactic acid thioethyl ester, propionyl lactic acid thioethyl ester, butyryl lactic acid thioethyl ester, valeryl lactic acid thioethyl ester, and isocaproyl lactic acid thiopropyl ester lactones such as γ-caprolactone, γ-heptalactone, γ-octalactone, γ-nonalactone, γ-decalactone, 7-decen-4-olide, 3-methyl-4-decen-4-olide, 3-methyl-5-decen-4-olide, γ-undecalactone, γ-dodecalactone, γ-tridecalactone, γ-tetradecalactone, δ-caprolactone, 2-hexen-5-olide, 2-hepten-5-olide, δ-octalactone, 2-octen-5-olide, 4-methyl-5-octanolide, δ-nonalactone, 2-nonen-5-olide, 4-methyl-5-nonanolide, δ-decalactone, 2-decen-5-olide, 4-methyl-5-decanolide, δ-undecalactone, 2-undecen-5-olide, 4-methyl-5-undecanolide, δ-dodecalactone, 2-dodecen-5-olide, 4-methyl-5-dodecanolide, δ-tridecalactone, 2-tridecen-5-olide, 4-methyl-5-tridecanolide, δ-tetradecalactone, 2-tetradecen-5-olide, µ2-pentadecen-5-olide, 2-hexadecen-5-olide, 2-heptadecen-5-olide, 2-octadecen-5-olide, 2-nonadecen-5-olide, 2-eicosen-5-olide and ε-decalactone.

The agent composition for imparting hydrogenated oil flavour of the present invention may include the flavour compound at, on the basis of the mass of the agent composition for imparting hydrogenated oil flavour of the present invention, generally 0.001 to 50% by mass, preferably 0.1 to 15% by mass and more preferably 1 to 5% by mass.

The agent composition for imparting hydrogenated oil flavour of the present invention may include the fatty acid at, on the basis of the mass of the imparting agent composition, generally 0.1 to 95% by mass, preferably 1 to 60% by mass and more preferably 5 to 30% by mass.

The agent composition for imparting hydrogenated oil flavour of the present invention may further include, as appropriate, a solvent component such as MCT (medium chain triglyceride) and glyceride: an antioxidant such as vitamin E; an oil-soluble component compatible with food products such as a flavour and a spice extract.

The agent for imparting hydrogenated oil flavour or the agent composition for imparting hydrogenated oil flavour of the present invention described hereinabove may be directly added to food products, for example, donuts, bread or premixes thereof, confectionery such as cakes, pies and chocolates and the like followed by processing by heating, thereby imparting a hydrogenated oil flavour to the food products, or alternatively may be added to oil to prepare hydrogenated oil flavoured oil.

Examples of the raw material oil to which the agent for imparting hydrogenated oil flavour of the present invention is added to prepare hydrogenated oil flavoured oil include any edible oil such as soybean oil, rapeseed oil, safflower oil, corn oil, sunflower oil, cottonseed oil, rice oil, olive oil, palm oil, coconut oil, sesame oil, beef tallow, lard, fish oil, hydrogenated oil and MCT and processed oil thereof obtained by fractionation, hydrogenation and transesterification. These oils may be respectively used alone or two or more oils may be used in combination. It is preferable that the raw material oil does not have aroma *per se* or it has been highly purified to such an extent that it has almost no aroma.

The raw material oil which is used for the hydrogenated oil flavoured oil of the present invention may contain hydrogenated oil as a part thereof. It is preferable that the raw material oil contains 1 to 20% by mass, particularly 2 to 10% by mass of hydrogenated oil and 80 to 99% by mass, particularly 90 to 98% by mass of non-hydrogenated oil. Thereby even when the content of trans fatty acids is reduced, the oil may have a hydrogenated oil flavour as a favourable aroma and flavour. By employing such an amount of addition, the hydrogenated oil flavoured oil may have a trans fatty acid content of 3% by mass or less and also have a favourable hydrogenated oil flavour. In nature, trans fatty acids are contained, for example, in milk fat at around 5% by mass and it is believed that consumption of trans fatty acids at such an extent may not significantly impact health. When the hydrogenated oil flavoured oil contains an extremely high amount of hydrogenated oil, unpleasant hydrogenation odour may be detected when the oil is used for cooking, and when the amount is extremely low, a preferable hydrogenated oil flavour may not be sufficiently imparted.

Examples of the hydrogenated oil used in this case include oil obtained by, for example, a method in which a raw material such as vegetable oil including soybean oil, rapeseed oil, palm oil, coconut oil and palm kernel oil or animal oil including fish oil, beef tallow and lard is hydrogenated at a temperature of about 120 to about 200°C in the presence of a nickel catalyst and the like.

The raw material oil used for the hydrogenated oil flavoured oil of the present invention may contain oil derived from palm as a part thereof. Examples of the oil derived from palm include palm oil, palm olein and the like. Particularly it is preferred to use a hydrogenated oil flavoured oil containing palm oil for fat spreads, because the fat spreads may have appropriate consistency to be spread on appropriate bread.

The hydrogenated oil flavoured oil of the present invention may further optionally contain an additive such as an emulsifying agent, an antioxidant, an antifoam and a colorant.

The agent for imparting hydrogenated oil flavour, the agent composition for imparting hydrogenated oil flavour or the hydrogenated oil flavoured oil of the present invention may be used to prepare spreads, margarine and the like, thereby imparting a hydrogenated oil flavour leading to rich taste and thick and mild sweetness and creamy texture of milk to the spreads and margarine. The agent for imparting hydrogenated oil flavour, the agent composition for imparting hydrogenated oil flavour or the hydrogenated oil flavoured oil of the present invention may also be widely used for food products containing oil other than spreads and margarine, resulting in the similar effect. Examples of the food and beverages containing oil include, without limitation, beverages such as milk, soya milk, milk-based drink, coffee drink containing milk, black tea drink containing milk, lactic acid drink and cocoa; dessert such as yogurt, jelly, pudding and mousse; cream such as butter cream and whipped cream; confectionery such as western and Japanese baked and steamed confectionery including various cakes, steamed buns with fillings; frozen dessert such as ice cream; chocolates such as milk chocolates; sweets such as chewing gum, hard candies, nougat candies and jelly beans; breads such as sweet buns; condiments such as miso, soy sauce, broth, dressings, mayonnaise, amino acid condiments, nucleic acid condiments, acidic flavour condiments, fermented condiments, pork extract, chicken extract, fish extract, yeast extract, protein hydrolysate, fish sauce, chilli bean paste, dried fish, konbu broth, soup stock, Chinese soup stock, sauce for barbequed meat, curry stock, stew stock, soup stock, broth stock, combined condiments, soup for noodle dishes (soba, udon, ramen, pasta and the like); sauces such as sauce for barbecued meat, barbecued chicken on skewers, broiled eel and the like and ketchup; soup such as corn soup, clear soup, egg soup, thick soup and miso soup; processed livestock products such as ham, sausages, cheese; seafood paste products such as tube-shaped fish cakes (*chikuwa*), seafood sticks (*kani-kama*) and boiled fish paste (*kamaboko*); retort food; snacks such as crisps, crackers, rice crackers and cookies: food boiled in soy sauce, prepared everyday dishes, frozen food, braised food, fried food, grilled food and the like.

The present invention is more specifically described hereinafter by way of Examples.

### Examples

(Reference Example 1) Preparation of a margarine composition mainly containing hydrogenated oil

Hydrogenated soybean oil (melting point: 34°C; 603 g) and 200 g of soybean oil were mixed. To the oil heated to 70°C, 1 g of soya lecithin and 1 g of sorbitan monostearate were added and mixed to prepare an oil phase. Separately, 180 g of water, 20 g of powdered skimmed milk and 3 g of sugar ester were mixed and then thoroughly solubilised at 70°C to prepare an aqueous phase. The oil phase and the aqueous phase were emulsified on a high-pressure homogenizer and cooled and solidified to prepare a margarine composition (reference product 1) having a content of hydrogenated oil in the oil of 75.1%.

### (Reference Example 2) Preparation of a margarine composition containing a reduced amount of hydrogenated oil (20% or less in oil)

Hydrogenated soybean oil (melting point: 34°C; 160 g), 393 g of palm oil (melting point: 42°C) and 250 g of soybean oil were mixed. To the oil heated to 70°C, 1 g of soya lecithin and 1 g of sorbitan monostearate were added and mixed to prepare an oil phase. Separately, 180 g of water, 20 g of powdered skimmed milk and 3 g of sugar ester were mixed and then thoroughly solubilised at 70°C to prepare an aqueous phase. The oil phase and the aqueous phase were emulsified on a high-pressure homogenizer and cooled and solidified to prepare a margarine composition (reference product 2) having a content of hydrogenated oil in the oil of 19.9%.

### (Example 1) Preparation of margarine compositions containing (E)-6-octenal

Margarine compositions, namely present products 1 to 4 and comparative products 1 to 4, were prepared by adding (E)-6-octenal (appropriately diluted with soybean oil) to the oil phase in the preparation of the oil phase described in Reference Example 2, so as to obtain the concentrations of (E)-6-octenal in the margarine compositions as indicated in Table 1.

### (Sensory evaluation)

Margarine compositions containing (E)-6-octenal of present products 1 to 4 and comparative products 1 to 4 and margarine compositions of reference product 1 and reference product 2 were subjected to sensory evaluation for the flavour thereof by 10 well-trained evaluators. Evaluation was carried out according to the following evaluation criteria and total scores are shown in Table 1. A summary of average sensory evaluation by all evaluators is also shown in Table 1.

### Evaluation criteria

Has thick and mild sweetness and rich taste as intense as those of the product (reference product 1) mainly containing hydrogenated oil: 3 points

Has thick and mild sweetness and rich taste slightly lower than those of the product (reference product 1) mainly containing hydrogenated oil: 2 points

Has no thick and mild sweetness or rich taste: 1 point
[Table 1]

**Table 1. Sensory evaluation of margarine compositions**

| | Hydrogenated oil content in oil in margarine composition | Concentration of (E)-6-octenal added | Total score | Sensory evaluation |
|---|---|---|---|---|
| Reference product 1 | 75.1% | -- | (30) | Has thick sweetness and rich taste while also having unpleasant hydrogenation odour. |
| Reference product 2 | 19.9% | -- | 10 | Has no thick sweetness and has aroma derived from vegetable oil. |
| Comparative product 1 | 19.9% | 1ppt | 10 | Has no difference from Reference product 2. |
| Comparative product 2 | 19.9% | 3ppt | 14 | Has almost no difference from reference product 2. |
| Present product 1 | 19.9% | 10ppt | 21 | Has thick sweetness and rich taste, which are slightly unbalanced. |
| Present product 2 | 19.9% | 100ppt | 22 | Has thick sweetness and rich taste, which are slightly unbalanced. |
| Present product 3 | 19.9% | 1ppb | 24 | Has sufficient thick sweetness and rich taste. |
| Present product 4 | 19.9% | 10ppb | 26 | Has sufficient thick sweetness and rich taste. |
| Comparative product 3 | 19.9% | 30ppb | 26 | Has sufficient thick sweetness and rich taste, while having an odd, sharp and distinctive aroma of aldehyde. |
| Comparative product 4 | 19.9% | 100ppb | 25 | Has sufficient thick sweetness and rich taste, while having an odd, sharp and distinctive aroma of aldehyde. |

As shown in Table 1, the margarine composition of reference product 1 containing 75.1% of hydrogenated oil in the oil gave a result where thick and mild sweetness and rich taste were exhibited while exhibiting unpleasant hydrogenation odour as well. Meanwhile, the margarine composition of reference product 2 containing 19.9% of hydrogenated oil in the oil did not have thick sweetness but had an aroma derived from vegetable oil. In contrast, margarine compositions (the amount of hydrogenated oil used in the oil: 19.9%) containing the present products 1 to 4 which are flavour compositions obtained by adding (E)-6-octenal to reference product 2 respectively had thick and mild sweetness and rich taste imparted thereto which are of hydrogenated oil and did not have unpleasant hydrogenation odour. The results showed that when the concentration of (E)-6-octenal added to a margarine composition was in the range of 10 ppt to 10 ppb, the margarine composition had thick sweetness and rich taste imparted thereto and had a flavour which was not particularly odd. On the other hand, the results showed that when the concentration of (E)-6-octenal added to a margarine composition was less than 10 ppt, the margarine composition did not have thick sweetness or rich taste imparted thereto and when the concentration of (E)-6-octenal added to a margarine composition was higher than 10 ppb, the margarine composition had thick sweetness and rich taste while having an odd, sharp and distinctive aroma of aldehyde.

### (Reference Example 3) Preparation of a butter flavour base composition

According to the formulation shown in Table 2, a butter flavour base composition (reference product 3) was prepared.
[Table 2]

**Table 2. Formulation of butter flavour base composition (reference product 3)**

| Components | Amount added |
|---|---|
| Butyric acid | 60 |
| Valeric acid | 4 |
| Isovaleric acid | 2 |
| Caproic acid | 12 |
| Caprylic acid | 18 |
| Nonanoic acid | 1 |
| Ethyl butyrate | 2 |
| γ-Decalactone | 5 |
| δ-Decalactone | 1 |
| Diacetyl | 50 |
| MCT (solvent) | 845 |
| Total | 1000 |

### (Reference Example 4) Preparation of a margarine composition mainly containing hydrogenated oil

Hydrogenated soybean oil (melting point: 34°C; 603 g) and 200 g of soybean oil were mixed. To the oil heated to 70°C, 1 g of soya lecithin and 1 g of sorbitan monostearate were added and mixed to prepare an oil phase. Separately, 180 g of water, 20 g of powdered skimmed milk and 3 g of sugar ester were mixed and then thoroughly solubilised at 70°C to prepare an aqueous phase. The oil phase, the aqueous phase and 1 g of the butter flavour base composition (reference product 3) shown in Table 2 were then emulsified on a high-pressure homogenizer and cooled and solidified to prepare a margarine composition (reference product 4) having a content of hydrogenated oil in the oil of 75.1%.

### (Reference Example 5) Preparation of a margarine composition containing a reduced amount of hydrogenated oil (20% or less in oil)

Hydrogenated soybean oil (melting point: 34°C; 160 g), 393 g of palm oil (melting point: 42°C) and 250 g of soybean oil were mixed. To the oil heated to 70°C, 1 g of soya lecithin and 1 g of sorbitan monostearate were added and mixed to prepare an oil phase. Separately, 180 g of water, 20 g of powdered skimmed milk and 3 g of sugar ester were mixed and then thoroughly solubilised at 70°C to prepare an aqueous phase. The oil phase, the aqueous phase and 1 g of the butter flavour base composition (reference product 3) shown in Table 2 were then emulsified on a high-pressure homogenizer and cooled and solidified to prepare a margarine composition (reference product 5) having a content of hydrogenated oil in the oil of 19.9%.

### (Example 2) Preparation of margarine compositions containing (E)-6-octenal

Butter flavour compositions (designated as present products 5 to 8 and comparative products 5 to 8, respectively) were prepared by adding (E)-6-octenal at the amounts (concentrations) indicated in Table 3 to the butter flavour base composition of Reference Example 3, and then margarine compositions were prepared by using the respective butter flavour compositions instead of the butter flavour base composition (reference product 3) used in Reference Example 5.
[Table 3]

**Table 3.**

| | Concentration of (E)-6-octenal added to butter flavour base composition (reference product 3) |
|---|---|
| Comparative product 5 | 1ppb |
| Comparative product 6 | 3ppb |
| Present product 5 | 10ppb |
| Present product 6 | 100ppb |
| Present product 7 | 1ppm |
| Present product 8 | 10ppm |
| Comparative product 7 | 30ppm |
| Comparative product 8 | 100ppm |

### (Sensory evaluation)

Margarine compositions containing butter-like flavour compositions of present products 5 to 8 and comparative products 5 to 8 and margarine compositions of reference product 4 and reference product 5 were subjected to sensory evaluation for the flavour thereof by 10 well-trained evaluators. Evaluation was carried out according to the following evaluation criteria and total scores are shown in Table 4. A summary of average sensory evaluation by all evaluators is also shown in Table 4.

### Evaluation criteria

Has thick and mild sweetness and rich taste of hydrogenated oil as intense as those of the margarine (reference product 4) mainly containing hydrogenated oil: 5 points

Has thick and mild sweetness and rich taste of hydrogenated oil slightly lower than those of the margarine (reference product 4) mainly containing hydrogenated oil: 4 points

Has thick and mild sweetness and rich taste of hydrogenated oil moderately lower than those of the margarine (reference product 4) mainly containing hydrogenated oil: 3 points

Has thick and mild sweetness and rich taste of hydrogenated oil significantly lower than those of the margarine (reference product 4) mainly containing hydrogenated oil: 2 points

Has almost no thick and mild sweetness and rich taste of hydrogenated oil: 1 point
[Table 4]

**Table 4. Sensory evaluation of margarine compositions**

| | Hydrogenated oil content in oil in margarine composition | Concentration of (E)-6-octenal added | Total score | Sensory evaluation |
|---|---|---|---|---|
| Reference product 4 | 75.1% | -- | (50) | Has a light butter-like aroma, thick and mild sweetness and rich taste of hydrogenated oil, while also having unpleasant hydrogenation odour. |
| Reference product 5 | 19.9% | -- | 10 | Has a light butter-like aroma without thick sweetness and has an aroma derived from vegetable oil. |
| Product containing comparative product 5 | 19.9% | 1ppt | 14 | No significant difference from reference product 5. |
| Product containing comparative product 6 | 1.09% | 3ppt | 19 | Has a light butter-like aroma, although has thick and mild sweetness and rich taste of hydrogenated oil that are significantly lower than those of reference product 1. |
| Product containing present product 5 | 19.9% | 10ppt | 31 | Has a light butter-like aroma and a flavour of hydrogenated oil, although having thick and mild sweetness and rich taste of hydrogenated oil that are moderately lower than those of reference product 4. |
| Product containing present product 6 | 19.9% | 100ppt | 35 | Has a light butter-like aroma and a flavour of hydrogenated oil, although having thick and mild sweetness and rich taste of hydrogenated oil that are moderately lower than those of reference product 4. |
| Product containing present product 7 | 19.9% | 1ppb | 44 | Has a light butter-like aroma as well as thick and mild sweetness and rich taste of hydrogenated oil at a similar extent as reference product 4. |
| Product containing present product 8 | 19.9% | 10ppb | 46 | Has a light butter-like aroma as well as thick and mild sweetness and rich taste of hydrogenated oil at a similar extent as reference product 4. |
| Product containing comparative product 7 | 19.9% | 30ppb | 45 | Has a light butter-like aroma as well as thick and mild sweetness and rich taste of hydrogenated oil at a similar extent as reference product 4, although also having an odd, sharp and distinctive aroma of aldehyde. |
| Product containing comparative product 8 | 19.9% | 100ppb | 48 | Has a light butter-like aroma as well as thick and mild sweetness and rich taste of hydrogenated oil at a similar extent as reference product 4, although also having an odd, sharp and distinctive aroma of aldehyde. |

As shown in Table 4, the result showed that the margarine composition of reference product 4 containing 75.1% of hydrogenated oil in the oil and also containing the butter flavour base composition had a light butter-like aroma as well as thick and mild sweetness and rich taste of hydrogenated oil while also having unpleasant hydrogenation odour. Meanwhile, the margarine composition of reference product 5 containing 19.9% of hydrogenated oil in the oil and also containing the butter flavour base composition had a light butter-like aroma without thick sweetness and had an aroma derived from vegetable oil. In contrast, margarine compositions (the amount of hydrogenated oil used in the oil: 19.9%) containing the present products 5 to 8 which are flavour compositions obtained by adding (E)-6-octenal to the flavour composition of reference product 3 respectively had a light butter-like aroma as well as thick and mild sweetness and rich taste imparted thereto which are of hydrogenated oil and did not have unpleasant hydrogenation odour. The results showed that when the concentration of (E)-6-octenal added was in the range of 10 ppb to 10 ppm in the flavour composition (the concentration in the margarine composition of 10 ppt to 10 ppb), the margarine composition had a light butter-like aroma, a hydrogenated oil flavour that can impart thick and mild sweetness and rich taste of hydrogenated oil, and a flavour which was not particularly odd. On the other hand, the results showed that when the concentration of (E)-6-octenal added was less than 10 ppb in the flavour composition (the concentration in the margarine composition of less than 10 ppt), the margarine composition did not have thick and mild sweetness or rich taste of hydrogenated oil imparted thereto, and when the concentration of (E)-6-octenal added was higher than 10 ppm in the flavour composition (the concentration in the margarine composition of higher than 10 ppb), the margarine composition had thick and mild sweetness and rich taste of hydrogenated oil while having an odd, sharp and distinctive aroma of aldehyde.

### (Example 3)

Butter-like flavour compositions were prepared by adding, to 1 part by mass of the butter-like flavour base composition of reference product 3, (E)-6-nonenal and 3-methyl-2,4-nonanedione, trans-4,5-epoxy-2(E)-decenal, (E)-6-nonenal, (Z)-6-nonenal, (Z)-6-octenal or (E)-2-nonenal at the concentrations indicated in Table 5.
[Table 5]

**Table 5.**

| | Present product 9 | Present product 10 | Present product 11 | Present product 12 | Present product 13 | Present product 14 | Present product 15 |
|---|---|---|---|---|---|---|---|
| (E)-6-Octenal | 200ppb | 200ppb | 200ppb | 200ppb | 200ppb | 200ppb | 200ppb |
| 3-Methyl-2,4-nonanedione | -- | 2ppm | -- | -- | -- | -- | -- |
| Wans-4,5-epox y-2(E)-decenal | -- | -- | 2ppm | -- | -- | -- | -- |
| (E)-6-Nonenal | -- | -- | -- | 2ppm | -- | -- | -- |
| (Z)-6-Nonenal | -- | -- | -- | -- | 2ppm | -- | -- |
| (Z)-6-Octenal | -- | -- | -- | -- | -- | 2ppm | -- |
| (E)-2-Nonenal | -- | -- | -- | -- | -- | -- | 2ppm |

### (Sensory evaluation)

Margarine compositions (reference product 5 except that the flavour part was replaced) were prepared by adding 1 g (about 0.1%) of the butter-like flavour composition of each of present products 9 to 15 to the butter flavour base composition instead of the butter flavour base composition of Reference Example 3 (reference product 3). The margarine compositions were subjected to sensory evaluation for the flavour thereof by 10 well-trained evaluators using the reference product 4 (containing 75.1% of hydrogenated oil in the oil) as a control. Evaluation was carried out according to the same evaluation criteria as Example 2. Total scores and a summary of average sensory evaluation by all evaluators are shown in Table 6.
[Table 6]

**Table 6. Sensory evaluation of margarine compositions**

| | Total score | Component A added | Sensory evaluation |
|---|---|---|---|
| Reference product 4 (mainly containing hydrogenated oil) | (50) | -- | Has a light butter-like aroma, thick and mild sweetness and rich taste of hydrogenated oil, while also having unpleasant hydrogenation odour. |
| Reference product 5 (product containing reference product 3) | 10 | -- | Has a light butter-like aroma without thick sweetness and has an aroma derived from vegetable oil. |
| Product containing present product 9 | 38 | -- | Has a light butter-like aroma and a hydrogenated oil flavour, although having thick and mild sweetness and rich taste of hydrogenated oil that are moderately lower than those of reference product 4. |
| Product containing present product 10 | 48 | 3-Methyl-2,4-nonanedione | Has a light butter-like aroma as well as thick and mild sweetness and rich taste of hydrogenated oil at a similar extent as reference product 4 without hydrogenation odour, resulting in a favourable flavour. |
| Product containing present product 11 | 45 | Trans-4, 5-epoxy-2(E)-decenal | Has a light butter-like aroma as well as thick and mild sweetness and rich taste of hydrogenated oil at a similar extent as reference product 4 without hydrogenation odour, resulting in a favourable flavour. |
| Product containing present product 12 | 47 | (E)-6-Nonenal | Has a light butter-like aroma as well as thick and mild sweetness and rich taste of hydrogenated oil at a similar extent as reference product 4 without hydrogenation odour, resulting in a favourable flavour. |
| Product containing present product 13 | 45 | (Z)-6-Nonenal | Has a light butter-like aroma as well as thick and mild sweetness and rich taste of hydrogenated oil at a similar extent as reference product 4 without hydrogenation odour, resulting in a favourable flavour. |
| Product containing present product 14 | 48 | (Z)-6-Octenal | Has a light butter-like aroma as well as thick and mild sweetness and rich taste of hydrogenated oil at a similar extent as reference product 4 without hydrogenation odour, resulting in a favourable flavour. |
| Product containing present product 15 | 45 | (E)-2-Nonenal | Has a light butter-like aroma as well as thick and mild sweetness and rich taste of hydrogenated oil at a similar extent as reference product 4 without hydrogenation odour, resulting in a favourable flavour. |

As shown in Table 6, the margarine-like composition containing present product 9 obtained by adding (E)-6-nonenal to the butter-like flavour composition of reference product 3 had a hydrogenated oil flavour while having thick and mild sweetness and rich taste of hydrogenated oil that were moderately lower than those of reference product 4 (a margarine composition mainly containing hydrogenated oil). Meanwhile margarine-like compositions containing butter-like flavour compositions (present products 10 to 15) respectively containing 3-methyl-2,4-nonanedione, trans-4,5-epoxy-2(E)-decenal, (E)-6-nonenal, (Z)-6-nonenal, (Z)-6-octenal or (E)-2-nonenal had thick and mild sweetness and rich taste of hydrogenated oil at a similar extent as reference product 4 without hydrogenation odour, resulting in a favourable flavour.

## Claims

1. An agent for imparting hydrogenated oil flavour comprising (E)-6-octenal.

2. An agent composition for imparting hydrogenated oil flavour comprising (E)-6-octenal as an active component.

3. An agent composition for imparting hydrogenated oil flavour comprising (E)-6-octenal and the following component A:
component A: one or more selected from the group consisting of 3-methyl-2,4-nonanedione, trans-4,5-epoxy-2(E)-decenal, (E)-6-nonenal, (Z)-6-nonenal, (Z)-6-octenal and (E)-2-nonenal.

4. The agent composition for imparting hydrogenated oil flavour according to claim 2, comprising (E)-6-octenal at a concentration in the range of 10 ppb to 10 ppm.

5. The agent composition for imparting hydrogenated oil flavour according to any one of claims 2 to 4, wherein the composition comprises (E)-6-octenal at 10 ppb to 10 ppm, and is added to an oil product having a hydrogenated oil content of less than 50% with regard to the total amount of oil, so that the amount of (E)-6-octenal in the oil product is in the range of 10 ppt to 10 ppb.

6. The agent composition for imparting hydrogenated oil flavour according to claim 3, wherein the composition comprises (E)-6-octenal and the component A, the content of (E)-6-octenal is 10 ppb to 10 ppm, and the ratio between (E)-6-octenal and the component A is in the range of ((E)-6-octenal) / 3-methyl-2,4-nonanedione = 0.01 to 10, ((E)-6-octenal) / (E)-6-nonenal = 0.01 to 10, ((E)-6-octenal) / (Z)-6-nonenal = 0.01 to 10, ((E)-6-octenal) / (Z)-6-octenal = 0.01 to 10, ((E)-6-octenal) / (E)-2-nonenal = 0.01 to 10 or ((E)-6-octenal) / trans-4,5-epoxy-2(E)-decenal = 0.01 to 100.

7. An oil product having a hydrogenated oil flavour, comprising the agent for imparting hydrogenated oil flavour according to claim 1 or the agent composition for imparting hydrogenated oil flavour according to any one of claims 2 to 6, such that a concentration of (E)-6-octenal in the oil product is in the range of 10 ppt to 10 ppb.

8. The oil product according to claim 7, wherein the hydrogenated oil content with regard to the total amount of oil is less than 50%.

9. A flavour composition comprising (E)-6-octenal at 10 ppb to 10 ppm, the flavour composition being added to an oil product having a hydrogenated oil content of less than 50% with regard to the total amount of oil, so that the amount of (E)-6-octenal in the oil product is in the range of 10 ppt to 10 ppb.

10. The flavour composition according to claim 9, wherein the composition comprises (E)-6-octenal and the following component A, and the ratio between (E)-6-octenal and the component A is in the range of ((E)-6-octenal) / 3-methyl-2,4-nonanedione = 0.01 to 10, ((E)-6-octenal) / (E)-6-nonenal = 0.01 to 10, ((E)-6-octenal) / (Z)-6-nonenal = 0.01 to 10, ((E)-6-octenal) / (Z)-6-octenal = 0.01 to 10, ((E)-6-octenal) / (E)-2-nonenal = 0.01 to 10 or ((E)-6-octenal) / trans-4,5-epoxy-2(E)-decenal = 0.01 to 100:
component A: one or more selected from the group consisting of 3-methyl-2,4-nonanedione, trans-4,5-epoxy-2(E)-decenal, (E)-6-nonenal, (Z)-6-nonenal, (Z)-6-octenal and (E)-2-nonenal.

11. An oil product which is obtained by adding thereto the flavour composition according to claim 9 or 10, such that a concentration of (E)-6-octenal in the oil product is in the range of 10 ppt to 10 ppb, the oil product having a hydrogenated oil content of less than 50% with regard to the total amount of oil.
